# EUROPEAN PATENT APPLICATION

(11) **EP 4 757 383 A1**
(43) Date of publication of application: **10.06.2026**
(21) Application number: 24383316.7
(22) Date of filing: 04.12.2024
(51) Int. Cl.: H04W 24/02, H04B 7/0413

(54) **RADIO ACCESS NETWORK CONFIGURATION**

(71) Applicant: Vodafone Group Services Limited, Newbury RG14 2FN (GB)
(72) Inventor: MARTINEZ, Manuel, London, W2 6BY (GB); CHAMI, Youssef, London, W2 6BY (GB); CABALLERO, Jose Eugenio, London, W2 6BY (GB)
(74) Representative: Boult Wade Tennant LLP

(57) **Abstract**

A Radio Access Network (RAN) is shared between a plurality of cellular networks and/or has radio resources with the capability to communicate using multiple wireless carrier signals simultaneously. Radio resources of the RAN are allocated in accordance with a predicted traffic requirement, in particular such that a geographical coverage of each cellular network remains the same.

## Description

### Technical Field of the Disclosure

The disclosure concerns configuring a Radio Access Network (RAN) for at least one cellular network. The RAN has radio resources with the capability to communicate using multiple wireless carrier signals simultaneously. Implementations may include a network function.

### Background to the Disclosure

In cellular networks, improved resource utilisation in the Radio Access Network (RAN) has benefits for network performance and energy efficiency, amongst others. A base station is a key part of the RAN, in its role to provide connectivity for users, and controls resource utilisation in the air interface, especially in terms of bandwidth and power.

In the context of 5G networks, improved reconfiguration of resource utilisation has become possible due to the use of Multiple Input, Multiple Output (MIMO) panels (particularly for Massive MIMO). Such MIMO panels are beneficial for enhancing network capacity and efficiency by using multiple antennas to transmit and receive signals simultaneously.

Whilst such technologies allow more flexible reconfiguration, they typically result in higher energy consumption at the base station. They are especially associated with increased power usage at the Radio Frequency (RF) frontend of the base station, which includes the MIMO panels. This energy consumption not only contributes to operational costs, but also reduces energy efficiency and therefore has environmental implications.

Improving energy efficiency whilst maintaining network performance when using these technologies therefore represents a significant challenge.

### Summary of the Disclosure

Against this background, the present disclosure provides methods for configuring a Radio Access Network (RAN) for at least one cellular network according to claims 1 and 5 and a network function as defined by claim 15. Other preferred features are disclosed with reference to the claims and in the description below.

This disclosure proposes a dynamic bandwidth allocation approach, which is especially applicable for (Massive) MIMO panels. Instead of always keeping all allocated bandwidth active, the bandwidth is actively managed by intelligently adjusting the utilisation (for example, in terms of number of active panels and/or the panel bandwidth allocation) based on real-time network traffic demand or predicted demand (for instance, based on historic information with AI or ML support functions). The allocation may be performed per cell sector, on a multi-sector or cell basis or across multiple cells.

This can beneficially address an issue that arises when multiple (Massive) MIMO panels are deployed at a single sector (or cell) to accommodate the allocation of different frequency carriers for single or Multiple Operators using Multiple Operator Core Network (MOCN) or Multi-operator RAN (MORAN) concepts. Existing approaches would keep all panels active during periods of low network traffic, consuming unnecessary energy. This leads to inefficient utilisation of resources, increased operational costs for operators and associated reduction in energy efficiency (which may not meet increased sustainability desiderata). The dynamic reconfiguration proposed in accordance with the disclosure may reduce energy consumption, whilst maintaining network performance. Resource utilisation and energy efficiency are thus improved.

This approach may be applied to a RAN having the capability to communicate using multiple wireless carrier signals simultaneously (for instance, using carrier aggregation on a single cellular network). The radio resources of the RAN (for example, the bandwidth and/or power for each wireless carrier signal) are allocated in accordance with a predicted traffic requirement. In this context, the RAN may have multiple wireless communication paths for the multiple wireless carrier signals. Each wireless communication path may then have a respective power amplifier for transmission. Advantageously, the allocation does not change the RAN geographical coverage.

Typically, this approach is applicable to a RAN for a single cellular network. However, it can also be applied to scenarios in which the RAN is shared between cellular networks (each having an individual Mobile Network Operator or MNO). In this case, each cellular network may use a single carrier or multiple carriers.

In another aspect, the RAN may be configured to be shared between cellular networks. The radio resources of the RAN are then allocated to each of cellular network in accordance with a respective predicted traffic requirement, such that a geographical coverage of each of cellular network remains the same. In this way, the radio resources of the RAN can be optimally shared between cellular networks.

Certain features may be applicable to any aspect as disclosed herein. In particular, a definition of the radio resources of the RAN may include a variety of RAN properties, typically at the physical layer. These may be properties configurable by a MIMO panel (or array). Typical properties that may be considered radio resources of the RAN may include one or more of: the number of MIMO panels (arrays) in use by the RAN; a number of layers of each MIMO panel (array); a communication bandwidth; a transmission power; and an antenna gain.

As part of the resource allocation process, it can be helpful to identify radio resources of the RAN needed to meet traffic requirements. For instance, radio resources of the RAN to meet the predicted traffic requirement (or where there are multiple cellular networks, predicted traffic requirements) can be compared with total radio resources activated at the RAN. Based on this comparison, radio resources of the RAN can be selected to be activated or deactivated. The active radio resources of the RAN after this selection has taken effect may then by allocated. Radio resources of the RAN that are selected to be deactivated may be placed in a sleep mode.

Where multiple cellular networks share the RAN, one MIMO panel may be shared between two or more networks by splitting a total communication bandwidth used by the MIMO panel between the networks. In this case, the portions of the total bandwidth allocated to each network may be commensurate with (and possibly proportional to) their respective predicted traffic requirements.

The predicted traffic requirement (or requirements, for multiple networks) can be determined through a variety of approaches. For example, the determination may be based on historical traffic data. Analysis of such data may allow predictions to be made. In particular, a machine learning algorithm may be used to determine the predicted traffic requirement or requirements.

A network function may predict the traffic requirement for each cellular network. Then, the network function may allocate the radio resources of the RAN for each cellular network based on the respective predicted traffic requirement and communicate the determined radio resources of the RAN for each of the plurality of cellular networks. The communication may particularly be to a radio resource configuration part of an Operational Support System (OSS) platform of the RAN. In this case, the network function may be within the OSS platform of the RAN.

All aspects may be implemented as a computer program and/or as a controller, for example as part of a network function for configuring a RAN. A network function for configuring a RAN configured to implement an approach according to the disclosure may also be considered.

### Brief Description of the Drawings

The approach of the disclosure may be put into practice in various ways, one of which will now be described by way of example only and with reference to the accompanying drawings in which:
Figure 1 schematically depicts a first exemplary bandwidth allocation between two cellular networks in accordance with the disclosure;
Figure 2 schematically depicts a second exemplary bandwidth allocation between two cellular networks in accordance with the disclosure; and
Figure 3 shows a flowchart of a process for configuring the RAN of at least one cellular network in line with the disclosure.

### Detailed Description of Preferred Embodiments

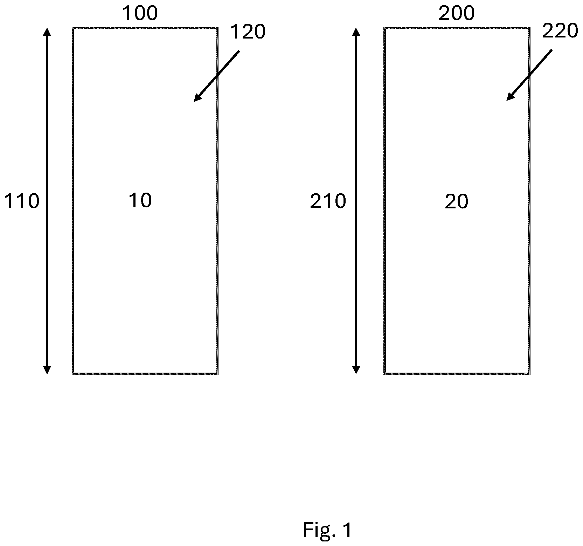

Referring first to Figure 1, there is schematically depicted a first exemplary bandwidth allocation at a RAN between a first cellular network 10 and a second cellular network 20 that are sharing the RAN resources, for instance using a Multi Operator Core Network (MOCN) or Multi Operator RAN (MORAN) configuration. A carrier of the first cellular network 10 is allocated the total bandwidth 110 radiating a first transmission power 120 of a first (Massive) MIMO panel 100. A carrier of the second cellular network 20 is allocated the total bandwidth 210 radiating a second transmission power 220 of a second (Massive) MIMO panel 200.

As an example, the first MIMO panel 100 total bandwidth 110 and second MIMO panel 200 total bandwidth 210 may each be 100MHz and the first transmission power 120 and second transmission power 220 may be 200W. This means that the first MIMO panel 100 and the second MIMO panel 200 are both active all the time radiating with a power spectral density of 2 W/MHz.

In practice, the traffic requirements of the first cellular network 10 and the second cellular network 20 vary significantly over time. For example, the typical traffic requirements in the middle of night are significantly lower than at peak points in the day. The respective bandwidth and/or power allocated to each panel for the respective network can be adjusted to meet this requirement.

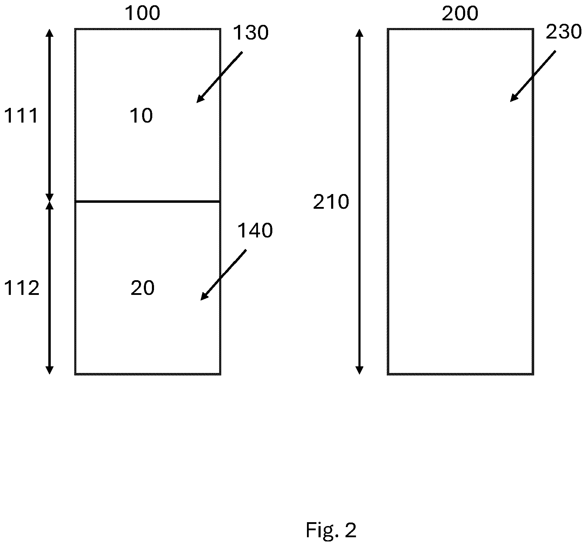

A situation may arise in which the total traffic requirements for both first cellular network 10 and second cellular network 20 may be achievable using a single MIMO panel. Referring next to Figure 2, there is schematically depicted a second exemplary bandwidth allocation between the first cellular network 10 and the second cellular network 20. The first cellular network 10 is allocated a first portion of the bandwidth 111 and a first portion of the transmission power 130 of the first MIMO panel 100. The first portion of the transmission power 130 is set to maintain the geographical coverage of the first cellular network 10. The second cellular network 20 is allocated a second portion of the bandwidth 112 and a second portion of the transmission power 140 of the first MIMO panel 100. The second portion of the transmission power 140 is likewise set to maintain the geographical coverage of the second cellular network 20. In line with the example given with reference to Figure 1, the first portion of the transmission power 130 and the second portion of the transmission power 140 are both set such that the power spectral density remains 2 W/MHz.

The second MIMO panel 200 is deactivated, such that its total bandwidth 210 is allocated a zero transmission power 230. By deactivating the second MIMO panel 200 and servicing both cellular networks using the first MIMO panel 100, the total radio resources of the RAN are utilized more efficiently. Energy is saved but network coverage remains the same, as the radiated power spectral density is unchanged. Once traffic demand increases, bandwidth allocations may be increased and the second MIMO panel 200 may be reactivated.

It will be understood from this example that utilization of the radio resources and particularly the number of panels, the panel layers, bandwidth, power, antenna gain and any combination thereof, may be configured to meet traffic requirements. By predicting the traffic requirements and setting the radio resource allocation accordingly, the radio resources may be efficiently used without reducing the performance of each network.

It will be understood that this approach may also be applied to a single cellular network operating multiple carriers, for example using carrier aggregation (CA). One or more MIMO panels may be allocated to each carrier or shared between the carriers.

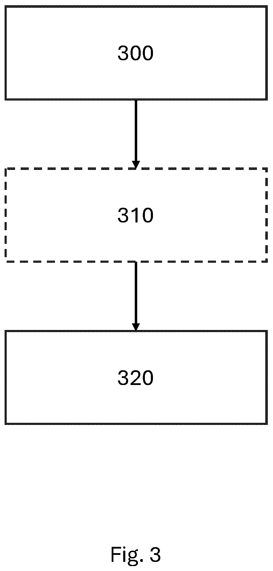

Referring now to Figure 3, there is shown a flowchart of a process for configuring the RAN of at least one cellular network. The RAN is shared between a plurality of cellular networks (for example, in a MOCN or MORAN, configuration) and/or the RAN has radio resources with the capability to communicate using multiple wireless carrier signals simultaneously. This approach may be implemented at a network function for configuring a RAN.

In a traffic analysis step 300, a predicted traffic requirement of each cellular network is obtained. For example, the system may continuously monitor network traffic patterns using advanced analytics and/or machine learning algorithms. This prediction may be at the network function. Alternatively, the traffic prediction need not be performed by the network function, but may be obtained by the network function from another source (which may be internal or external the RAN).

In an optional, resource activation step 310, dynamic resource activation may be implemented, particularly where the resources include MIMO panels or arrays. The total radio resources of the RAN to meet the predicted traffic requirement (from traffic analysis step 300) may be determined. Where the RAN services multiple cellular networks, the total radio resources of the RAN to meet the predicted traffic requirement may be across those multiple networks and/or where the RAN services multiple carriers, the total radio resources of the RAN to meet the predicted traffic requirement may be across those carriers. This total radio resources of the RAN to meet the predicted traffic requirement is then compared with the total radio resources currently activated at the RAN. For instance, the total radio resources of the RAN to meet the predicted traffic requirement may be higher than the total radio resources currently activated, such that more activated radio resources may be required. Alternatively, the total radio resources of the RAN to meet the predicted traffic requirement may be lower than the total radio resources currently activated, such that some activated radio resources may not be needed.

Radio resources of the RAN can then be selected to be activated or deactivated based on the comparison. This can be performed dynamically. For instance, based on the analysis, the system may dynamically activate or deactivate Massive MIMO panels and/or layers as needed. During periods of low traffic, only a subset of panels and/or layers is activated to conserve energy (ideally only one per sector). Any radio resources of the RAN that are selected to be deactivated may be placed a sleep mode at a network entity of the RAN (for example, a base station).

A resource allocation step 320 is then performed. Specifically, the radio resources of the RAN are allocated to each of the plurality of cellular networks (if the RAN is shared between the networks) and/or each of the multiple wireless carrier signals (if one or more cellular networks uses multiple carrier signals) in accordance with the respective predicted traffic requirement (or requirements) obtained in the traffic analysis step 300. The allocation may be performed for each sector of a cell of the RAN, for multiple sectors, for each cell of the RAN, for multiple cells or for the RAN as a whole.

The radio resources of the RAN may comprise one or more of: a number of MIMO arrays or panels; a number of layers of each MIMO array or panel; a communication bandwidth; a transmission power; and an antenna gain. In particular, the allocation is performed such that a geographical coverage of each cellular network remains the same. In other words, the transmission power spectral density (and/or antenna gain over the bandwidth) for each cellular network is typically maintained. Advantageously, the allocating is performed in respect of radio resources of the RAN selected to be active (after optional dynamic resource activation step 310).

In one implementation, the allocating comprises determining, at the network function, radio resources of the RAN for each cellular network based on the respective predicted traffic requirement. Then, the determined radio resources of the RAN for each of the plurality of cellular networks may be communicated to a radio resource configuration part of an Operational Support System (OSS) platform of the RAN. Optionally, the network function may be within the OSS platform of the RAN.

As an example, when network traffic increases, the system may automatically scale up the bandwidth allocation, for instance by making use of additional activated panels. This may allow sufficient capacity to be available to meet user demand without compromising network performance. By keeping the power spectral density the same, but changing the allocated bandwidth dynamically based in traffic demand, only the minimum number of panels may need to be active at quiet times, but the subsequent panels may be enabled when the sector gets busier. Bandwidth can grow accordingly to the maximum configured per each cellular network.

In other words, one particular implementation may share a MIMO panel of the RAN between first and second cellular networks of the plurality of cellular networks, by allocating a first portion of a communication bandwidth used by the MIMO panel to the first cellular network and allocating a second portion of a communication bandwidth used by the MIMO panel to the second cellular network. The first and second portions are based on respective predicted traffic requirements for each of the first and second cellular networks. The transmission power allocation for each of the first and second portions may be set in accordance with a fixed (constant and/or predetermined) power spectral density.

From the user's perspective, there is beneficially no noticeable difference in network coverage or quality. The system may seamlessly adjust resource activation and/or adjustment in the background, which may thereby make sure uninterrupted connectivity is provided. Benefits of this approach include: energy savings (by dynamically adjusting resource activation and/or allocation, energy consumption may be significantly reduced, for instance during off-peak hours, leading to lower environmental impact); operational efficiency (resource utilisation can be optimised and overall network efficiency improved, resulting in better performance and service quality for users); and sustainability (carbon emissions associated with network operations may be reduced, contributing to meeting sustainability goals of the telecommunications industry).

In summary, the dynamic bandwidth allocation system and switching capability proposed herein, particularly for Massive MIMO panels, may offer a practical solution to the energy efficiency challenges faced by mobile network operators. By intelligently managing resources based on traffic demand that may be real-time, this approach not only improves operational efficiency but also supports sustainability initiatives within the telecommunications industry.

Any of the methods described herein may be implemented as a computer program. The computer program may be configured to control a network node or entity to perform any method according to the disclosure. A controller, server or network node of a cellular network may also be provided, configured to operate in accordance with certain methods disclosed herein. For example, the controller, server or network node may include a processor and at least one communication interface, particularly comprising one or both of a transmitter and receiver.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment (or aspect) or with reference to multiple embodiments (or aspects) are also provided, even if that combination has not been explicitly detailed herein.

## Claims

1. A method for configuring a Radio Access Network, RAN, for at least one cellular network, the RAN having radio resources with the capability to communicate using multiple wireless carrier signals simultaneously, the method comprising:
allocating the radio resources of the RAN in accordance with a predicted traffic requirement of the at least one cellular network.

2. The method of claim 1, wherein the RAN comprises multiple wireless communication paths for the multiple wireless carrier signals, each wireless communication path having a respective power amplifier for transmission.

3. The method of claim 1 or claim 2, wherein the step of allocating is performed such that a geographical coverage of each of the at least one cellular network remains the same.

4. The method of any preceding claim, wherein the RAN is shared between a plurality of cellular networks.

5. A method for configuring a Radio Access Network, RAN, that is shared between a plurality of cellular networks, the method comprising:
allocating radio resources of the RAN to each of the plurality of cellular networks in accordance with a respective predicted traffic requirement, such that a geographical coverage of each of the plurality of cellular networks remains the same.

6. The method of any preceding claim, wherein the radio resources of the RAN comprise one or more of: a number of MIMO arrays or panels; a number of layers of each MIMO array or panel; a communication bandwidth; a transmission power; and an antenna gain.

7. The method of any preceding claim, further comprising:
comparing total radio resources of the RAN to meet the predicted traffic requirement or predicted traffic requirements with total radio resources activated at the RAN; and
selecting radio resources of the RAN to be activated or deactivated based on the comparison, the step of allocating being performed in respect of radio resources of the RAN selected to be active.

8. The method of claim 7, further comprising:
placing radio resources of the RAN that are selected to be deactivated in a sleep mode at a network entity of the RAN.

9. The method of claim 4, claim 5 or any of claims 6 to 8 when dependent on claim 4 or claim 5, wherein the step of allocating comprises:
sharing a MIMO panel of the RAN between first and second cellular networks of the plurality of cellular networks, by allocating a first portion of a communication bandwidth used by the MIMO panel to the first cellular network and allocating a second portion of a communication bandwidth used by the MIMO panel to the second cellular network, the first and second portions being based on respective predicted traffic requirements for each of the first and second cellular networks.

10. The method of any preceding claim, wherein the respective predicted traffic requirement for each cellular network is determined using a machine learning algorithm.

11. The method of any preceding claim, further comprising:
predicting the traffic requirement for each cellular network at a network function; and
wherein the step of allocating comprises determining, at the network function, radio resources of the RAN for each cellular network based on the respective predicted traffic requirement and communicating the determined radio resources of the RAN for each of the plurality of cellular networks to a radio resource configuration part of an Operational Support System, OSS, platform of the RAN.

12. The method of claim 11, wherein the network function is within the OSS platform of the RAN.

13. The method of claim 4, claim 5 or any of claims 6 to 12 when dependent on claim 4 or claim 5, wherein the RAN is shared between the plurality of cellular networks using a Multi Operator Core Network, MOON, or Multi Operator RAN, MORAN, configuration.

14. The method of any preceding claim, wherein the step of allocating is performed for each sector of a cell of the RAN.

15. A network function for configuring a Radio Access Network, RAN, for at least one cellular network, the network function being configured to perform the method of any preceding claim.
